# EUROPÄISCHE PATENTSCHRIFT

(11) **EP 1 163 864 B1**
(45) Veröffentlichungstag und Bekanntmachung des Hinweises auf die Patenterteilung: **22.09.2004**
(21) Anmeldenummer: 01114004.3
(22) Anmeldetag: 08.06.2001
(51) Int. Cl.: A47B 96/20, B32B 21/08, B32B 33/00, B32B 31/00, B32B 31/12, B32B 31/26, B32B 31/28

(54) **Möbelplatte und Verfahren zu deren Herstellung**
Method for producing a furniture panel and a furniture panel produced by the same method
Procédé de fabrication d'un panneau de meuble et panneau de meuble produit selon le même procédé

(30) Priorität: 13.06.2000 DE 10029043
(43) Veröffentlichungstag der Anmeldung: 19.12.2001
(73) Patentinhaber: bulthaup GmbH & Co KG, 84153 Aich (Bodenkirchen) (DE)
(72) Erfinder: Langer, Otto, 84494 Neumarkt-St. Veit (DE); Rieder, Manfred, 84160 Frontenhausen (DE); Haberl, Thomas, 85356 Freising/Attaching (DE); Stigler, Martin, 84137 Vilsbiburg/Frauensattling (DE)
(74) Vertreter: Thoma, Michael

(56) Entgegenhaltungen:
- EP-A- 0 500 943
- EP-A- 0 673 761
- EP-A- 1 080 854
- WO-A-93/06995
- DD-A- 257 797

## Beschreibung

Die vorliegende Erfindung betrifft ein Paneel, insbesondere eine Möbelplatte aus einem Holzwerkstoff, mit einer auf den Paneelkorpus aufgebrachten Kunststoffkante. Ferner betrifft die vorliegende Erfindung ein Verfahren zur Herstellung eines solchen Paneels.

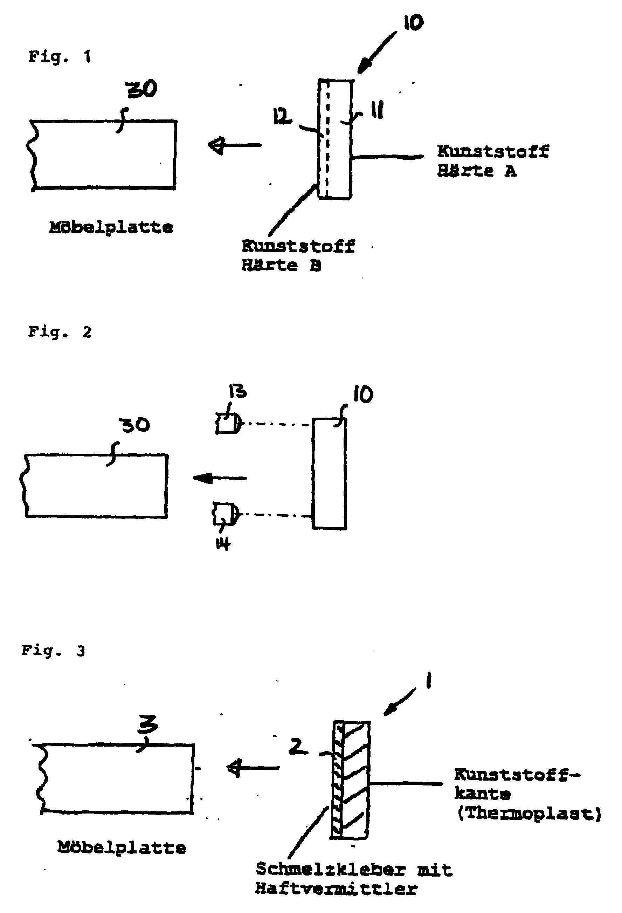

Kunststoffkanten werden auf Kanten von Holzwerkstoffplatten gewöhnlich maschinell auf speziellen Anlagen aufgefahren. Die Verklebung erfolgt entweder über einen Heißschmelzkleber, der im Durchlauf aufgewalzt wird oder durch einen Kleber, der vorher schon auf die Kunststoffkante aufgebracht wurde und mittels einer Heißluftdusche wieder verflüssigt wird sowie anschließend zusammen mit der Kante im Durchlauf aufgewalzt wird. Fig. 2 verdeutlicht ein solches Verfahren. Auf eine Seite der Kunststoffkante 1 aus einem Thermoplast ist eine Schmelzkleberschicht 2 mit einem Haftvermittler aufgebracht. Die Kunststoffkante 1 wird sodann zusammen mit der Schmelzkleberschicht 2 gegen die entsprechende Stirnseite der Möbelplatte 3 gefahren, so daß eine Verklebung der Kunststoffkante 1 mit der Möbelplatte 3 erfolgt.

Unbefriedigend an diesem Verfahren ist, daß die Leimfuge des bisher verwendeten Schmelzklebers bei Benutzung bzw. Reinigung deutlich sichtbar wird. Die Klebefuge nimmt Schmutz auf. Es kann Feuchtigkeit eindringen, welche die Qualität des Möbelpaneels beeinträchtigen kann. Darüber hinaus kann eine Fugenverfärbung entstehen, die die Frontoptik von z.B. Möbeln sichtbar beeinträchtigt.

Der vorliegenden Erfindung liegt daher die Aufgabe zugrunde, ein verbessertes Paneel bzw. ein verbessertes Verfahren zur Herstellung eines solchen Paneels der eingangs genannten Art zu schaffen, die Nachteile aus dem Stand der Technik vermeiden und letzteren in vorteilhafter Weise weiterbilden. Insbesondere soll ein Paneel mit einer dauerhaften und optisch makellos bleibenden Verbindung zwischen Paneelkorpus und Kunststoffkante geschaffen werden.

(DD257797) beschreibt klebstoffreie Verbindungen aus Thermoplast- und Holzwerkstoff (Tischplatten), wobei die zu fügende Fläche einseitig partiell kurzzeitig mindestens bis zum Schmelzpunkt z.B. durch HF-Strahlung oder Wärmeelementen erwärmt und aufgeschmolzen und anschließend verpreßt wird (vgl. Anspr. 1-4; Fig.; Seite 1, Par. 5). Die Kunststoffkante hat keine Bereiche verschiedener Härte, bzw. verschiedenen Schmelzpunkten.
DD257797 offenbart nicht, daß eine Kunststoffkante nur an der Oberflächenschicht aufgeschmolzen wird.

WO9306995 definiert in den Ansprüchen 1- 3 ein mehrschichtiges Kantenband mit unterschiedlichen Schmelzpunkten der verschiedenen Lagen, welches durch Aufschmelzen in einem kontinuierlichen Verfahren auf eine Holzplatte aufgeschweißt wird. Die Schichten sind nicht unterschiedlich dick.
Eine Laserbeaufschlagung wird nicht offenbart.

Die am 07.03.2001 veröffentlichte europäische Anmeldung EP1080854 zeigt ein Verfahren zum Befestigen von Deckleisten auf den Schmalseiten von Möbelplatten wobei diese thermoplastischen Deckleisten, z.B. mittels Hochfrequenzstrahlung, aufgeschweißt werden (vgl. Anspr. 1-2, 7-8, 10 und 12, Absätze 2, 4-5 und 7-8).
Auf einen Haftvermittler wird verzichtet.

Hier wurde das Problem der Beseitigung einer sichtbaren oder ästhetisch/dekorativ nicht ansprechenden (Kleber-)Fuge bei Verwendung eines Klebers gelöst.

Hinsichtlich des Paneels wird diese Aufgabe durch ein Paneel der genannten Art mit den kennzeichnenden Merkmalen des Patentanspruches 1 gelöst. In verfahrenstechnischer Hinsicht wird die genannte Aufgabe durch ein Verfahren der genannten Art mit den kennzeichnenden Merkmalen des Patentanspruchs 6 gelöst. Bevorzugte Ausgestaltungen der Erfindung sind Gegenstand der Unteransprüche.

Es ist also eine kleberfreie Verbindung zwischen der Kunststoffkante und dem Paneelkorpus vorgesehen. Es erfolgt eine unmittelbare Fügung der Kunststoffkante auf den Paneelkorpus frei von einer Kleberfuge. Die Kunststoffkante wird auf den Paneelkorpus aufgeschweißt. Sie wird ohne Kleber angefahren, der Kleber wird sozusagen von der Kunststoffkante selbst gebildet. Insbesondere wird eine Oberfläche der Kunststoffkante mittels Laserlicht aufgeschmolzen und letztere mit ihrer aufgeschmolzenen Oberfläche fugenfrei auf den Paneelkorpus gefügt.

Durch das Weglassen des Klebers entsteht keine Klebefuge, die Schmutz aufnehmen oder Feuchtigkeit eindringen lassen würde. Es wird eine dauerhaft makellose Optik der Nahtstelle zwischen Kunststoffkante und Paneelkorpus erreicht. In verfahrenstechnischer Hinsicht ergibt sich der große Vorteil, daß die komplizierten, teueren und sehr pflegeaufwendigen Heißkleberanlagen eingespart werden können.

Es wird eine Kunststoffkante verwendet, die Bereiche unterschiedlicher Härte besitzt. Insbesondere wird eine koextrudierte Thermoplast-Kante eingesetzt, deren harte Seite vom Paneelkorpus abgewandt ist und die die Kantenfunktion Schutz und Optik der Platte erfüllt. Die zum Paneelkorpus hin liegende Schicht der Kunststoffkante ist weicher eingestellt und kann leichter aufgeschmolzen werden, d.h. sie besitzt einen niedrigeren Schmelzpunkt als die harte äußere Schicht der Kunststoffkante.

Der Schichtaufbau der Kunststoffkante besitzt im Bereich größerer Härte eine größere Dicke als im weicheren Bereich. Er ist mehr als doppelt so dick, gemäß einer vorteilhaften Ausführung der Erfindung etwa dreimal so dick sein wie der weiche Bereich. Der weiche Bereich übernimmt durch sein Aufschmelzen bzw. Wiedererwärmen beim Auffahren die Kleberfunktion. Heißschmelzkleber wird eingespart, so daß keine Fugenverfärbung entstehen kann.

Das Aufschmelzen der Oberfläche der Kunststoffkante zu deren Verklebung erfolgt durch Beaufschlagung mittels einer Laservorrichtung. Es ist also eine Laserschweißverbindung zwischen der Kunststoffkante und dem Paneelkorpus vorgesehen. Die Verschweißung mittels Laser besitzt den großen Vorteil, daß der Wärmeeintrag und dementsprechend das Aufschmelzen der Kunststoffkante sehr exakt steuerbar ist. Insbesondere kann nur eine sehr dünne Schicht der Kunststoffkante aufgeschmolzen werden, während der restliche Teil der Kunststoffkante im festfasigen Zustand und dementsprechend gut handhabbar bleibt.

Zudem wird die Kunststoffkante nur partiell, d. h. nur ein Teil der Fläche, die anschließend auf den Möbelkorpus gedrückt wird, aufgeschmolzen. Zum Beispiel kann vorgesehen sein, die Kunststoffkante nur in äußeren Randbereichen aufzuschmelzen und mit dem Paneelkorpus zu verschweißen. Hierdurch kann mit kleinen Laserleistungen gearbeitet werden, zudem behält die Kunststoffkante insgesamt im wesentlichen ihre mechanischen Eigenschaften, so daß sie in der üblichen Weise verarbeitet werden kann.

Grundsätzlich können verschiedene Laser zum Verschweißen verwendet werden. Sie können vorzugsweise anhand ihrer Wellenlänge und dem jeweils verwendeten Werkstoff der Kunststoffkante ausgewählt werden. Nach einer bevorzugten Ausführung der Erfindung wird mit einem Halbleiter- bzw. Diodenlaser gearbeitet.

Es können Kunststoffkanten aus verschiedenen Werkstoffen verwendet werden. Gemäß einer bevorzugten Ausführungsform können Kunststoffkanten aus ABS, d. h. Acrylnitril-Butadien-Styrol, oder aus PVC, d. h. Polyvinylchlorid, Verwendung finden. Diese Kanten besitzen nicht nur gute mechanische Eigenschaften, sondern sie erreichen auch eine große Festigkeit der Schweißverbindung zum Paneelkorpus, insbesondere wenn dieser aus Preßspan besteht. Gemäß einer alternativen Ausführungsform der Erfindung kann eine PE-Kunststoffkante, d. h. aus Polyethylen vorgesehen sein. Eine solche Kunststoffkante erzielt eine hochfeste Verbindung zum Paneelkorpus, insbesondere auch dann, wenn dieser eine sogenannte HPL-Beschichtung, d. h. eine Oberfläche aus einem Hochdrucklaminat z. B. aus Papier und Kunstharz aufweist. Weitere Werkstoffe der Kunststoffkante sind möglich.

Es werden in Ausführung der Erfindung mehrschichtige Kunststoffkanten mit unterschiedlichen Härtebereichen der zuvor beschriebenen Art mittels Laser auf den Paneelkorpus aufgeschweißt. Auch hier kann die Kunststoffkante an ihrer dem Paneelkorpus zugewandten Oberfläche aufgeschimolzen bzw. derart wieder erwärmt werden, daß die entsprechende Oberfläche klebrig wird.

Das Verbinden kann dann in Durchlaufanlagen erfolgen, um das Fügen mit großer Effizienz durchzuführen.

Nachfolgend wird die Erfindung anhand eines bevorzugten Ausführungsbeispieles und einer zugehörigen Zeichnung näher erläutert. In der Zeichnung zeigen:
- Fig. 1: eine schematische Darstellung des Fügevorganges einer Kunststoffkante auf eine Möbelplatte gemäß einer Ausführung der Erfindung,
- Fig. 2: eine schematische Darstellung des Fügevorganges einer Kunststoffkante auf einer Möbelplatte, wobei die Kunststoffkante mittels Laser aufgeschmolzen wird, und
- Fig. 3: eine schematische Darstellung des Fügens einer Kunststoffkante auf eine Möbelplatte mittels Schmelzkleber.

Wie Fig. 1 zeigt, wird eine Kunststoffkante 10 verwendet, die aus einem koextrudierten Thermoplast besteht. Sie besitzt zwei Schichten unterschiedlicher Härte. Die außenliegende, d.h. von dem Plattenkorpus 30 abgewandte Schicht 11 besteht aus einem Kunststoff der Härte A, während die dem Plattenkorpus zugewandte Schicht 12 der Kunststoffkante 10 aus einem Kunststoff der Härte B besteht, wobei die Härte A größer ist als die Härte B. Die Dicke der Kunststoffkante 10 kann variieren und an die Erfordernisse angepaßt werden. Gemäß einer Ausführung der Erfindung besitzt die Kante eine Dicke von etwa 2mm. Die außenliegende Schicht 11 großer Härte kann eine Dicke von etwa 1,5mm besitzen, während die zum Möbelkorpus 30 hin liegende Schicht 12 eine Dicke von etwa 0,5mm aufweisen kann.

Andere Dicken sind analog möglich, wobei vorzugsweise entsprechende Schichtdickenverhältnisse vorgesehen sein können.

Die Möbelplatte 30 kann aus verschiedenen Werkstoffen, z. B. Kunststoff gefertigt sein. Die in Fig. 1 gezeigte Möbelplatte 30 besteht aus einem Holzwerkstoff. Sie kann aus Preßspan bestehen und/oder einen Schichtaufbau besitzen.

Die Kunststoffkante 10 wird unmittelbar und ohne Kleber auf den Korpus der Möbelplatte 30 gefügt. Mittels nicht dargestellter Laserbeaufschlagung wird die innenliegende, weichere Schicht 12 wiedererwärmt und aufgeschmolzen, so daß sie beim Auffahren der Kunststoffkante die Kleberfunktion übernimmt. Die Verbindung selbst erfolgt dann vorzugsweise in Durchlaufanlagen, in denen die Kunststoffkante 10 mit ihrer aufgeschmolzenen Schicht 12 auf die entsprechende Kante des Möbelplattenkorpus gefügt wird. Die wiedererwärmte Schicht 12 kühlt ab und erstarrt erneut, so daß sie mit dem Möbelplattenkorpus verklebt. Die Kunststoffkante ist auf den Möbelplattenkorpus aufgeschweißt.

Fig. 2 zeigt die Verschweißung der Kunststoffkante 10 und der Möbelplatte 30 mittels Laser. Die Kunststoffkante 10 ist wie die zuvor in Verbindung mit Fig. 1 beschriebene Kunststoffkante ausgebildet.

Wie Fig. 2 zeigt, wird die der Möbelplatte 30 zugewandte Seite der Kunststoffkante 10 mittels Laserlicht aufgeschmolzen. Die Laserbeaufschlagung kann durch zwei Laservorrichtungen 13 und 14 erfolgen. Es können grundsätzlich verschiedene Lasertypen zum Einsatz kommen. Nach einer bevorzugten Ausführung der Erfindung werden Diodenlaser bzw. Halbleiterlaser mit einer Wellenlänge von 0,8 bis 1,0 µm verwendet, um die Oberfläche der Kunststoffkante 10 aufzuschmelzen. Die Strahlleistung kann verschieden, insbesondere in Abhängigkeit des verwendeten Werkstoffs, der gewünschten Schmelzgeschwindigkeit und des gewünschten Aufschmelzvolumens gewählt werden. Gemäß einer Ausführung der Erfindung können die Laservorrichtung 13 und 14 jeweils mit einer Strahlleistung im Bereich von 10² Watt gefahren werden. Vorzugsweise werden die Bearbeitungsparameter der Laservorrichtung derart gewählt, daß eine Umsetzung des Laserlichts in Wärme naher der Oberfläche der Kunststoffkante 10 erfolgt. In vorteilhafter Weiterbildung kann vorgesehen sein, daß die Eindringtiefe der Laserstrahlung weniger als 0,5 mm, insbesondere bis etwa 0,2 mm beträgt. Die Tiefe der tatsächlichen flüssig werdenden Aufschmelzzone kann weniger als 100 µm, vorzugsweise bis zu 50 µm betragen.

Um effizient auch mit nur kleinen Laserleistungen arbeiten zu können, kann vorgesehen sein, daß nur ein Teil der zu fügenden Oberfläche der Kunststoffkante 10 tatsächlich mit dem Paneelkorpus verschweißt wird. Es kann ausreichend sein, nur bis zu 50 % der zu fügenden Kunststoffkantenoberfläche aufzuschmelzen und mit dem Paneelkorpus zu verschweißen. Sofern die Festigkeit ausreichend ist, kann vorgesehen sein, weniger als 25 % der zu fügenden Fläche aufzuschmelzen und zu verschweißen. Mittels der Laserbeaufschlagung ist eine nur partielle Verschweißung sehr gut möglich. Insbesondere können mittels den zwei Laservorrichtung 13 und 14 Randbereiche der Kunststoffkante 10 aufgeschmolzen und verschweißt werden, so daß keine Schmutzsammelfugen entstehen können.

Mit dem beschriebenen Verfahren wird die nachteilige Klebefuge bisheriger Möbelplatten beseitigt. Es kann keine Feuchtigkeit eindringen. Eine Fugenverfärbung entsteht nicht. Darüber hinaus ist eine kommissionsweise Produktion von unterschiedlichen Kunststofffarben in wesentlich besserer Qualität z.B. für den Frontenbereich von Küchenmöbeln möglich.

In vorteilhafter Weise können Kunststoffkanten in allen Farben auf die Möbelplatte geschweißt werden, da die Schweißnaht bzw. -verbindung stets die gleiche Farbe wie die Kunststoffkante selbst besitzt, da sie von dieser selbst gebildet wird. Es entstehen keine Farbunregelmäßigkeiten zwischen der Möbelplatte und der Kante, wie das beim Schmelzkleberverfahren nachteilig der Fall ist.

## Patentansprüche

1. Möbelpaneel, insbesondere Möbelplatte aus einem Holzwerkstoff, mit einer auf den Paneelkorpus (30) aufgebrachten Kunststoffkante (10), wobei eine Schweißverbindung zwischen der Kunststoffkante (10) und dem Paneelkorpus (30) vorgesehen ist, **dadurch gekennzeichnet, dass** die Kunststoffkante (10) aus Kunststoffschichten (11, 12) unterschiedlicher Härte besteht, wobei ein Bereich größerer Härte der Kunststoffkante (10) eine mehr als doppelt so große Dicke als ein Bereich geringerer Härte besitzt, und dass nur ein Teil der auf den Paneelkorpus (30) gefügten Oberfläche der Kunststoffkante (10) mit dem Paneelkorpus (30) verschweißt ist.

2. Möbelpaneel nach dem vorhergehenden Anspruch, wobei eine Laserschweißverbindung zwischen der Kunststoffkante (10) und dem Paneelkorpus (30) vorgesehen ist.

3. Möbelpaneel nach einem der vorhergehenden Ansprüche, wobei der Bereich größerer Härte der Kunststoffkante (10) etwa dreimal so dick ist wie der Bereich kleinerer Härte der Kunststoffkante (10).

4. Möbelpaneel nach einem der vorhergehenden Ansprüche, wobei nur weniger als 50 % der auf den Paneelkorpus gefügten Oberfläche der Kunststoffkante mit dem Paneelkorpus verschweißt ist.

5. Möbelpaneel nach einem der vorhergehenden Ansprüche, wobei die Kunststoffkante eine Schweiß- bzw. Aufschmelzschicht mit einer Tiefe von 0,2 mm oder weniger besitzt.

6. Verfahren zur Herstellung eines Möbelpaneels, insbesondere einer Möbelplatte aus einem Holzwerkstoff, bei dem auf einem Paneelkorpus (30) eine Kunststoffkante (10) aufgebracht wird, wobei eine Oberfläche der Kunststoffkante (10) aufgeschmolzen und die Kunststoffkante sodann mit ihrer aufgeschmolzenen Oberfläche auf den Paneelkorpus (30) gefügt wird, **dadurch gekennzeichnet, dass** durch Laserbeaufschlagung nur eine dünne Schicht (12) der Kunststoffkante (10) aufgeschmolzen und mit dem Paneelkorpus verschmolzen wird, während die restliche dickere Schicht (11) der Kunststoffkante (10) im festphasigen Zustand gehalten wird.

7. Verfahren nach dem vorhergehenden Anspruch, wobei eine Kunststoffkante (10) mit Bereichen (11, 12) unterschiedlicher Härte, die einen Bereich kleinerer Härte und einen im Vergleich dazu mehr als doppelt so dicken Bereich größerer Härte umfassen, verwendet wird, wobei der Bereich kleinerer Härte aufgeschmolzen und mit dem Paneelkorpus verschmolzen wird, und nur ein Teil der mit dem Paneelkorpus zu fügende Oberfläche der Kunststoffkante aufgeschmolzen und mit dem Paneelkorpus verschweißt wird.

8. Verfahren nach dem vorhergehenden Anspruch, wobei die Laserbeaufschlagung mit Laserlicht von einer Wellenlänge im Bereich von 0,7 bis 30 µm, vorzugsweise 0,8 bis 1,0 µm durchgeführt wird.

9. Verfahren nach einem der vorhergehenden Ansprüche, wobei die Kunststoffkante (10) mittels einer Laservorrichtung (13, 14) mit einer Strahlleistung im Bereich von 10² Watt aufgeschmolzen wird.

10. Verfahren nach einem der vorhergehenden Ansprüche, wobei eine Laserbeaufschlagung der Kunststoffkante (10) derart erfolgt, dass eine Eindringtiefe der Laserstrahlung weniger als 0,5 mm, vorzugsweise etwa 0,05 bis 0,2 mm beträgt.

11. Verfahren nach einem der vorhergehenden Ansprüche, wobei weniger als 50 % der mit dem Paneelkorpus (30) zu fügenden Oberfläche der Kunststoffkante (10) aufgeschmolzen und mit dem Paneelkorpus verschweißt werden.

12. Verfahren nach einem der vorhergehenden Ansprüche, wobei die Kunststoffkante (10) im Durchlauf an den Paneelkorpus (30) gefahren wird.

## Claims

1. A furniture panel, in particular a furniture board consisting of a wooden material, having a plastics edge (10) applied on the panel body (30), wherein a welded joint is provided between the plastics edge (10) and the panel body (30),
**characterized in that** the plastics edge (10) consists of plastic layers (11,12) having respectively different hardnesses, wherein a region of higher hardness of the plastics edge (10) has a thickness which is more than twice the thickness of a region of lower hardness, and that only a portion of the surface of the plastics edge (10) jointed with the panel body (30) is welded on the panel body (30).

2. The furniture panel according to the preceding claim, wherein a laser welding joint is provided between the plastics edge (10) and the panel body (30).

3. The furniture panel according to one of the preceding claims, wherein the region of higher hardness of the plastics edge (10) has a thickness approximately three times the thickness of the region of lower hardness of the plastics edge (10).

4. The furniture panel according to one of the preceding claims, wherein only less than 50 percent of the surface of the plastics edge jointed with the panel body is welded on the panel body.

5. The furniture panel according to one of the preceding claims, wherein the plastics edge comprises one of a welding layer and a to be-fused layer having a depth of 0,2 mm or less.

6. A method for producing a furniture panel, in particular a furniture board consisting of a wooden material, wherein a plastics edge (10) is applied on a panel body (30) and wherein a surface of the plastics edge (10) is fused and then the plastics edge is jointed with its fused surface on the panel body (30) **characterized in that** only a thin layer (12) of the plastics edge (10) is fused by laser application and welded on the panel body while the remaining thicker layer (11) of the plastics edge (10) is maintained in a state of solid phase.

7. The method according to the preceding claim, wherein a plastics edge (10) is used having regions (11,12) of respectively different hardness comprising a region of lower hardness and a region having a hardness which is more than twice in relation thereto and wherein only a portion of the surface of the plastics edge to be jointed with the panel body is fused and welded on the panel body.

8. The method according to the preceding claim, wherein the laser application is carried out with laser light having a wave length in a range from 0,7 to 30 µm, preferably a range from 0,8 to 1,0 µm.

9. The method according to one of the preceding claims, wherein the pastics edge (10) is fused by means of a laser unit (13,14) having a beam power in the range of 10² watts.

10. The method according to one of the preceding claims, wherein the laser application to the plastics edge is carried out so that a penetration depth of the laser beam is less than 0,5 mm, preferably approximately 0,05 to 0,2 mm.

11. The method according to one of the preceding claims, wherein less than 50 percent of the surface of the plastics edge (10) to be jointed with the panel body (30) is welded on the panel body.

12. The method according to one of the preceding claims, wherein the plastics edge (10) is continously conveyed to the panel body (30).

## Revendications

1. Panneau de meuble, en particulier panneau de meuble en un matériau en bois avec une arête en matière plastique (10) appliquée sur le corps du panneau (30), une soudure étant prévue entre l'arête en matière plastique (10) et le corps du panneau (30), **caractérisé en ce que** l'arête en matière plastique (10) se compose de couches en matière plastique (11, 12) avec différents degrés de dureté, moyennant quoi une zone de plus grande dureté de l'arête en matière plastique (10) possède une épaisseur de plus du double de celle d'une zone de moindre dureté, et moyennant quoi seulement une partie de la surface de l'arête en matière plastique (10) ajoutée sur le corps du panneau (30) est soudée avec le corps du panneau (30).

2. Panneau de meuble selon la revendication précédente, où une liaison par soudure au laser est prévue entre l'arête en matière plastique (10) et le corps du panneau (30).

3. Panneau de meuble selon l'une quelconque des revendications précédentes, où la zone de plus grande dureté de l'arête en matière plastique (10) est à peu près trois fois plus épaisse que la zone de moindre dureté de l'arête en matière plastique (10).

4. Panneau de meuble selon l'une quelconque des revendications précédentes, où seulement moins de 50 % de la surface de l'arête en matière plastique qui est ajoutée sur le corps du panneau, est soudée avec le corps du panneau.

5. Panneau de meuble selon l'une quelconque des revendications précédentes, où l'arête en matière plastique possède une couche de soudure et/ou à fondre d'une profondeur de 0,2 mm ou moins.

6. Procédé pour la fabrication d'un panneau de meuble, en particulier d'un panneau de meuble en un matériau en bois, dans lequel une arête en matière plastique (10) est appliquée sur un corps de panneau (30), moyennant quoi une surface de l'arête en matière plastique (10) est fondue, et l'arête en matière plastique est alors ajoutée sur le corps de panneau (30) avec sa surface fondue, **caractérisé en ce qu'**avec l'alimentation en laser, seule une mince couche (12) de l'arête en matière plastique (10) est fondue et est fondue ensemble avec le corps du panneau, alors que le restant de la couche plus épaisse (11) de l'arête en matière plastique (10) est maintenu dans un état solide.

7. Procédé selon la revendication précédente, où l'on utilise une arête en matière plastique (10) avec des zones (11, 12) avec différents degrés de dureté englobant une zone de moindre dureté et une zone de plus grande dureté d'une épaisseur plus de deux fois supérieure en comparaison avec l'autre, moyennant quoi la zone de moindre dureté est fondue puis est fondue ensemble avec le corps du panneau, et moyennant quoi seule une partie de la surface de l'arête en matière plastique à assembler avec le corps du panneau est fondue, puis est fondue ensemble avec le corps du panneau.

8. Procédé selon la revendication précédente, dans lequel l'alimentation en laser est réalisée avec une lumière à laser d'une longueur d'onde dans une plage de 0,7 à 30 µm, et de préférence de 0,8 à 1,0 µm.

9. Procédé selon l'une quelconque des revendications précédentes, dans lequel l'arête en matière plastique (10) est fondue à l'aide d'un dispositif laser (13, 14) avec une puissance du faisceau dans une plage de 10² watt.

10. Procédé selon l'une quelconque des revendications précédentes, dans lequel une alimentation en laser de l'arête en matière plastique (10) s'effectue de manière à ce qu'une profondeur de pénétration du rayonnement laser est inférieure à 0,5 mm, et est de préférence comprise entre 0,05 à 0,2 mm.

11. Procédé selon l'une quelconque des revendications précédentes, dans lequel moins de 50 % de la surface de l'arête en matière plastique (10) à assembler avec le corps du panneau (30) est fondue, puis est fondue ensemble avec le corps du panneau.

12. Procédé selon l'une quelconque des revendications précédentes, dans lequel l'arête en matière plastique (10) est mise contre lé corps du panneau (30) lors d'une passe.
